# EUROPEAN PATENT APPLICATION

(11) **EP 4 764 798 A1**
(43) Date of publication of application: **24.06.2026**
(21) Application number: 25219564.9
(22) Date of filing: 28.11.2025
(51) Int. Cl.: G06F 3/0481, G06F 3/0484

(54) **INTERACTIVE TAGGING SYSTEM FOR USER-DIRECTED ORGANIZATION OF CONTENT CAPTURES**

(30) Priority: 20.12.2024 US 202418991097
(71) Applicant: Microsoft Technology Licensing, LLC, Redmond, WA 98052 (US)
(72) Inventor: MACLENNAN, C James, Redmond, 98052 (US); FENG, Selena Chun, Redmond, 98052 (US); ANDERSON, Bret Paul, Redmond, 98052 (US); ATHILKAR, Medhaj Suresh, Redmond, 98052 (US); TUBBS, Kenneth Martin, Jr., Redmond, 98052 (US); ELLIOTT, Brendan David, Redmond, 98052 (US); IVANOV, Melinda, Redmond, 98052 (US); NESTVOLD, Emma Catherine, Redmond, 98052 (US); JORGENSON, Jens Erik, Redmond, 98052 (US); MISRA, Yash, Redmond, 98052 (US); MISTRI, Pratik Pankajbhai, Redmond, 98052 (US)
(74) Representative: CMS Cameron McKenna Nabarro Olswang LLP

(57) **Abstract**

The techniques presented herein provide an interactive user interface for user-directed organization of content captures using visual indicators (e.g., tags) and a native content capture repository for systemwide interoperability. In various examples, a user can perform a gesture or other input to activate a tagging mode within a desktop environment. The user can then select a visual indicator (e.g., an emoji, text) from the tagging panel to attach to a content capture of the desktop environment. In one example, the visual indicator is generally associated with the content capture as a whole. In another example, the user utilizes an augmented cursor to place the selected visual indicator at a specific location in association with a specific object of visual content (e.g., an image, a block of text). Moreover, as content captures are stored natively, e.g., at the operating system level, external applications can access content captures via an application programming interface.

## Description

### BACKGROUND

More and more of daily life occurs through personal computing devices (e.g., laptops, desktop computers) such as completing assignments for work and school, planning vacations, and online shopping. As such, a user may utilize a diverse array of software applications to accomplish various tasks. Moreover, a given software application can be transformed by different contexts. For instance, an internet browser can be utilized to look up nearby restaurants at one moment and research information for a presentation at another moment. Consequently, the user may lose track of what they were doing at a given moment as well as the context of that activity. To aid users in retracing their steps, many software applications include features for searching and retrieving content and/or activity, such as the browsing history in an internet browser and/or a listing of recent files in a file explorer.

However, existing features such as keyword-based searches, folder hierarchies, and application-specific organization tools may lack the ability to record context and decipher user intent. For example, a user may attempt a keyword search to recover a source of information for citation in a presentation. Unfortunately, the lack of specificity in existing approaches may prevent the user from finding the information for which they are searching. Moreover, such features place an additional burden on the user to remember exact details about their past activity such as the name of a website, title of an article, or other information. Manual recollection can be especially challenging due to the sheer amount of information the user generates and interacts with. That is, many existing systems place the onus on the user to spend time manually organizing, categorizing, and documenting information rather than accomplishing the tasks they wish to complete.

It is with respect to these and other considerations that the disclosure made herein is presented.

### SUMMARY

The techniques presented herein provide an interactive user interface for user-directed organization of content captures using visual indicators (e.g., tags). As mentioned above, wholly manual recollection of past activity may be impractical due to the sheer volume of content a user interacts with on a daily basis. To that end, recent developments in end user experiences have streamlined activity recall operations by collecting, with the consent of the user, a record of user activity such as a content capture (e.g., a screenshot) of a desktop environment. In this way, content captures enable an accurate recollection of moments of interest in past user activity thereby enhancing user engagement and productivity. In addition, content captures can be grouped in an interactive user interface that enables users to view organized collections of content captures based on shared attributes (e.g., a common topic, a common application).

However, in some existing systems for generating such groups, it can be challenging to balance the accuracy of groupings and quick processing times. For instance, accurately grouping content captures by topic (e.g., vacation planning, online shopping) may require significant processing from advanced computational models (e.g., a large language model). Such models often require multiple seconds or even minutes to accurately analyze a single content capture. Furthermore, such automated methods may be unable to group content captures according to more intangible attributes (e.g., funny content, inspirational content).

As such, the disclosed techniques enable an interactive tagging mode for user-directed organization of content captures. In addition, the present techniques also provide a native content capture repository enabling the use of content captures across various external entities (e.g., software applications, websites). That is, the interactive user interface and native content capture repository can augment an activity recall system with manual categorization and system-wide compatibility, respectively.

Such activity recall user experiences can be customized to a user's current context, preferences, and tendencies. As such, these user experiences can be enabled by collecting a record of user activity such as a content capture (e.g., a screenshot) of a desktop environment. A content capture may include image data, text data, audio data, or other multimedia content. In general, a desktop environment is a graphical user interface abstraction of an operating system that enables a user to intuitively interact with software applications installed on a computing device. In some examples, the described user experiences require user opt-in and consent.

Generally described, a user can perform a gesture or other input to activate a tagging mode within a desktop environment. In one example, the user clicks and/or taps on a tagging icon in system icon tray to activate a tagging panel. In another example, the user positions their cursor at a predefined position using a pointing device (e.g., a mouse, a stylus) or a directional input device (e.g., a keyboard, a gamepad) to activate the tagging panel. Consequently, when entering the tagging mode, the current activity within the desktop environment pauses to allow the user to perform various tagging actions which will be elaborated upon further below (e.g., pausing video content, pausing audio content).

After activating the tagging mode, for example via the tagging panel, the user can then select a visual indicator from a plurality of predefined visual indicators for association with the current state of the desktop environment. In a specific example, the visual indicators are pictograms (often referred to as emoji or emoticons) representing an emotion or idea. For instance, an emoji depicting a laughing face can indicate humorous content while an emoji depicting an airplane can indicate content associated with travel plans. In another example, the visual indicators are strings of text to indicate categorizations of onscreen content (e.g., "Funny", "Shopping"). In still another example, the visual indicators are colors (e.g., red, blue, green). In various examples, the color selected by the user is represented by an icon (e.g., a colorful box), a border around the content capture, or other suitable representation of the selected color. Furthermore, the user can also add a custom visual indicator such as a custom pictogram and/or a custom string of text.

In some examples, the operating system generates a content capture of the current desktop environment and associates the selected visual indicator with the content capture. That is, the operating system generally tags the overall content capture with the selected emoji, text string, or other visual indicator. The content capture and associated visual indicator are then stored in a native (e.g., operating system-level) content capture repository that is accessible by other software applications and/or websites that wish to leverage user activity records, such as for productivity features.

Alternatively or additionally, the tagging system can engage an augmented tagging mode that enables the user to freely position the selected visual indicator within the desktop environment prior to generating the content capture. In various examples, the positioning by the user enables the tagging system to determine an association between the visual indicator and specific onscreen content objects. For instance, the tagging system can scan the current desktop environment to detect visual content objects (e.g., images, text) to which the user can attach a visual indicator.

In a specific example, the user activates the tagging mode during an online meeting to capture a specific moment in a text chat such as a helpful insight from a colleague. Accordingly, the user can select a visual indicator (e.g., a heart emoji) to indicate an object of visual content that the user "liked". In response, the tagging system augments the user's cursor with the selected visual indicator. The tagging system also identifies eligible visual content objects to which the user can attach the selected visual indicator. The augmented cursor accordingly enables the user to select a specific position within the desktop environment to attach the visual indicator to the particular chat message. In various examples, the user selects the position using a user-directed positioning control such as a pointing device (e.g., a mouse, a stylus), a directional input device (e.g., a keyboard, a gamepad), and/or a voice input. Consequently, the tagging system saves a content capture of the desktop environment depicting the online meeting with the selected visual indicator associated with the chat message.

Irrespective of whether the tagging system is configured to save content captures upon selection of a visual indicator and/or the augmented cursor example mentioned above, the content captures are stored in a native content capture repository. That is, the generated content captures are stored in an operating system-level storage component for accessibility by external entities, rather than constrained with a specific application and/or website. For instance, a user may generate a content capture in an online meeting application. An external application such as a personal productivity tool can then request the content capture to enable its own features with respect to the content capture.

Furthermore, tagged content captures can be organized into groupings of content captures according to the visual indicator associated with each content capture. The groupings can be automatically collected in an interactive user interface. For example, a user may use a "laughing face" emoji to tag content they found humorous and an "airplane" emoji to tag content related to travel. Consequently, the user can utilize the interactive user interface to view a first collection of content captures tagged with the "laughing face" emoji and a second collection of content captures tagged with the "airplane" emoji. In this way, the user can seamlessly find previous content captures based on their selected tags.

As mentioned above, advanced computational models such as large language models often require multiple seconds or even minutes to accurately analyze a single content capture resulting in significant computing resource and energy consumption. Furthermore, such models may be unable to group content captures according to more intangible attributes (e.g., funny content, inspirational content). In addition, the probabilistic nature of such models may result in unintuitive groupings leading to a degraded user experience. Stated another way, automated analysis and organization is a reactive and oftentimes opaque process from a user perspective. In contrast, empowering the user to proactively organize content captures using user-directed tags enhances the efficiency of user activity recall systems by reducing computing resource consumption as well as providing an engaging user experience.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1A illustrates an example operation of activating a system tray icon activating a tagging mode within a desktop environment.
FIG. 1B illustrates an example user interface for an interactive tagging panel that generates a tagged content capture upon a user selection of a visual indicator.
FIG. 2A illustrates an example operation of activating a tagging panel utilizing a cursor gesture.
FIG. 2B illustrates an example user interface for an interactive tagging panel that augments a cursor to enable a user to place a visual indicator in association with a specific object of visual content.
FIG. 3 illustrates a user interface for interacting with collections of content captures that are organized according to associated visual indicators as well as an interactive timeline.
FIG. 4 is a block diagram of a tagging system for enabling user-directed organization of content captures using visual indicators.
FIG. 5 is a flow diagram showing aspects of a process for user-directed organization of content captures using visual indicators.
FIG. 6 is a flow diagram showing aspects of a process for tagging visual content in a desktop environment of a computing device for collection in an activity visualization user interface.
FIG. 7 is a computer architecture diagram illustrating an illustrative computer hardware and software architecture for a computing system capable of implementing aspects of the techniques and technologies presented herein.

### DETAILED DESCRIPTION

The techniques presented herein provide an interactive user interface for user-directed organization of content captures using visual indicators (e.g., tags) and a native content capture repository for systemwide interoperability. As mentioned above, a user can perform a gesture or other input to activate a tagging mode within a desktop environment. The user can then select a visual indicator (e.g., an emoji, a string of text) from the tagging panel to associate the selected visual indicator with a content capture of the desktop environment. In one example, the visual indicator is generally associated with the content capture as a whole. In another example, the user can utilize an augmented cursor to place the selected visual indicator at a specific location in association with a specific object of visual content (e.g., an image, a block of text).

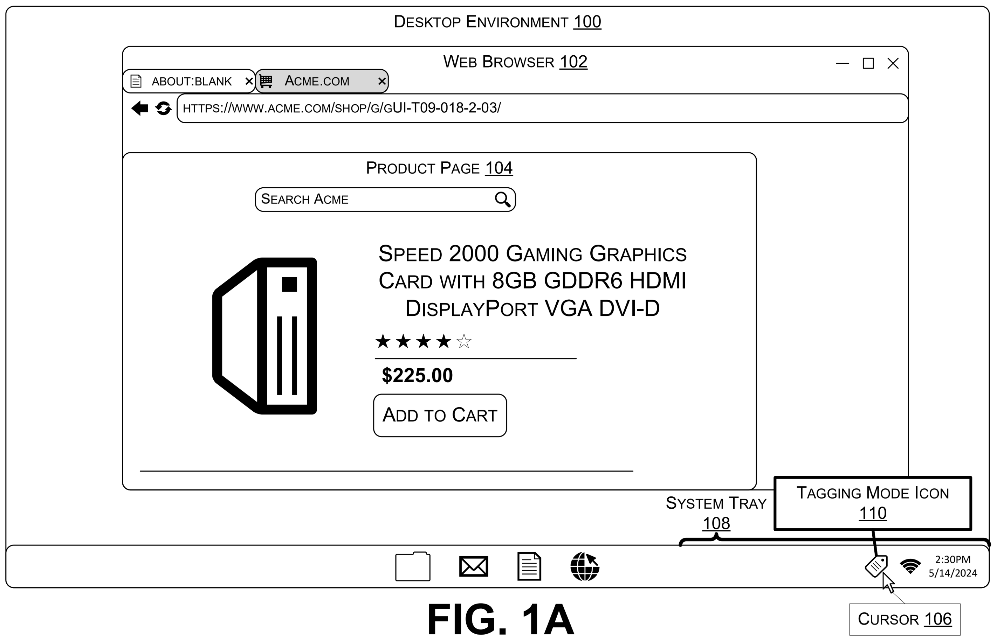

Various examples, scenarios, and aspects related to the techniques are described below with respect to FIGS. 1A-7.

FIG. 1A illustrates a desktop environment 100 displaying a web browser 102 in which a user is viewing a product page 104 for a "Speed 2000 Gaming Graphics Card". In the present example, the user may determine that they wish to save the product page 104 for purchase at a later time. Accordingly, the user navigates a cursor 106 to a system tray 108 to select a tagging mode icon 110. In various examples, the cursor 106 is controlled by a user via a pointing device such as a mouse or a stylus. In another example, the cursor 106 is controlled by a motion input such as a touch input, a visual gaze input, and/or a voice input. Irrespective of the input method, activating the tagging mode icon 110 engages a tagging mode that pauses onscreen activity within the desktop environment 100 such as multimedia content (e.g., video content, audio content).

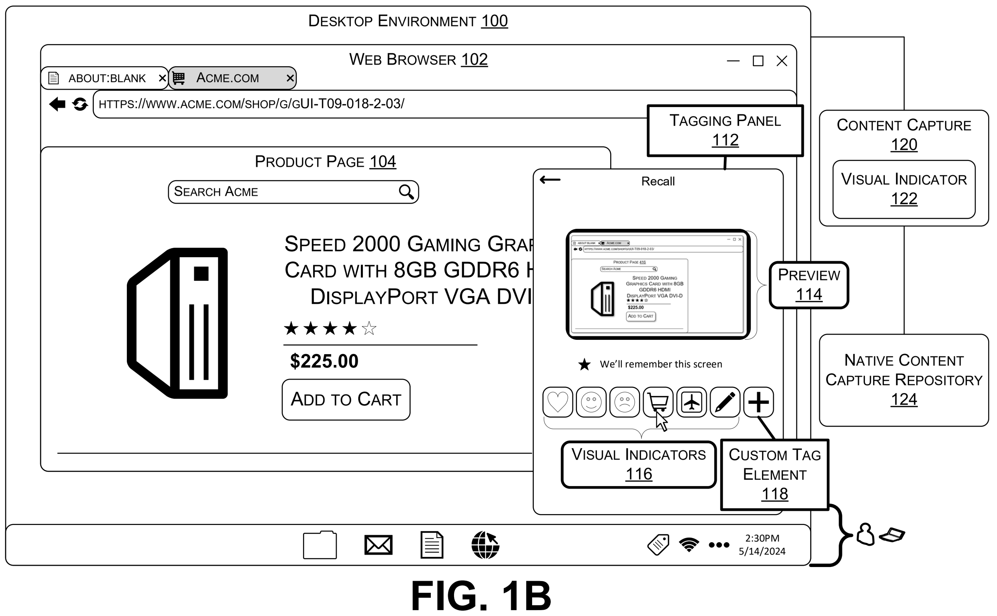

Turning now to FIG. 1B, activating the tagging mode icon 110 as described above causes a tagging panel 112 to appear above and/or proximate to the system tray 108 to enable the user to tag a content capture prior to saving. As shown, the tagging panel 112 includes a preview 114 of the content capture to be saved. In the present example, the preview 114 depicts the web browser 102 displaying the product page 104. In addition, the tagging panel 112 includes a predefined plurality of visual indicators 116, illustrated in FIG. 1B as pictograms (e.g., emoji, emoticons). In various examples, the visual indicators 116 are selected for the tagging panel 112 based on past usage. For instance, if the user has frequently utilized the "heart" visual indicator, the tagging panel 112 can display the "heart" visual indicator first in the list of visual indicators 116. In another example, a user can configure certain visual indicators as "favorites" that are always displayed in the tagging panel 112 irrespective of usage history. In this way, the plurality of visual indicators 116 within the tagging panel 112 can change over time based on user activity and/or user preferences.

In addition, the tagging panel 112 includes a custom tag element 118 that enables a user to create a custom visual indicator. In one example, activating the custom tag element 118 presents the user with an additional selection of pictograms (e.g., emoji) beyond the predefined plurality of visual indicators 116. In another example, activating the custom tag element 118 enables the user to input a user-defined text string (e.g., "shopping list") and/or a user-defined pictogram to create their own visual indicators in addition to standard pictograms such as user generated images, colors, or any suitable indicator.

In the present example, the user selects a "shopping cart" visual indicator from the tagging panel 112 to tag the product page 104 displayed in the web browser 102. In response, a content capture system generates a content capture 120 of the desktop environment 100 depicting the product page 104 within the web browser 102 with the selected visual indicator 122 (e.g., the "shopping cart" pictogram) attached. Within the context of the present disclosure, the selected visual indicator 122 is "attached" to the content capture 120 such that data defining the selected visual indicator 122 is stored in association with data defining the content capture 120. In a specific example, the content capture system is a component of an activity recall system that enables a user to view and interact with content captures to gain insight into their past activity. Consequently, when the content capture 120 is rendered and/or otherwise accessed by an external entity (e.g., a software application) the data defining the selected visual indicator 122 is displayed and/or retrieved in addition to the data defining the content capture 120. In the present example, selecting the visual indicator 122 serves as an approval of the preview 114 to be saved as displayed within the tagging panel 112. Moreover, in this example, the selected visual indicator 122 is generally associated with the content capture 120 and not necessarily associated with a specific object of visual content depicted within the content capture 120.

The content capture 120 and associated visual indicator 122 are then stored in a native content capture repository 124. As mentioned above, the native content capture repository 124 can be an operating system-level storage for tagged content captures such as the content capture 120. Generally described, the native content capture repository 124 is accessible by applications and/or websites executing on the computing device. That is, some systems restrict the storage and access of content captures to a specific application and/or website (e.g., a user activity recall application). In contrast, the native content capture repository 124 can be queried by external entities via an application programming interface for retrieving content captures. In another example, external entities can also store content captures in the native content capture repository 124 via the application programming interface. For example, a user may generate a content capture 120 of a web browser 102 when shopping online. Accordingly, the content capture 120 is stored in the native content capture repository 124. Subsequently, the user may be organizing a shopping list in a personal productivity application. As such, the personal productivity application can access the content capture 120 by querying the native content capture repository 124.

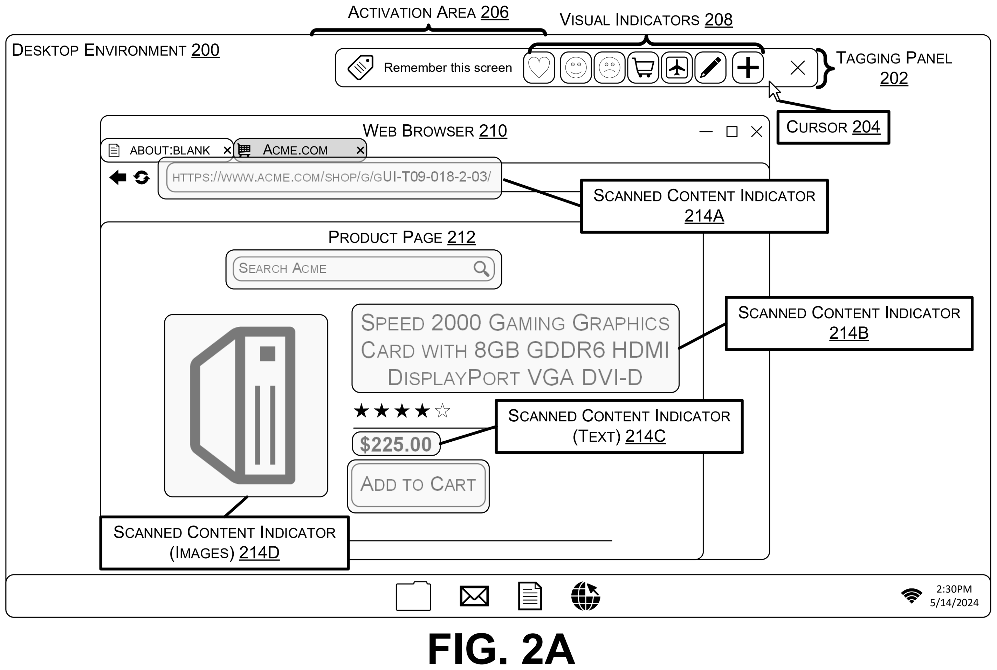

Turning now to FIG. 2A, aspects of another example desktop environment 200 for tagging content captures are shown and described. While the examples discussed above with respect to FIGS. 1A and 1B involved activating a tagging panel by selecting (e.g., clicking, tapping) a tagging mode icon, the present example enables a user to activate a tagging panel 202 by performing a gesture (e.g., a hover input) using a cursor 204 within a dedicated activation area 206 of the desktop environment 200. Stated another way, performing the gesture within the activation area 206 activates a tagging mode that pauses onscreen activity and activates the tagging panel 202. Similar to the above examples, the desktop environment 200 includes a web browser 210 displaying a product page 212.

In one example, the activation area 206 is a specific position within the desktop environment 200 that, when a user places the cursor 204 at the specific position, causes the tagging panel 202 to appear. As shown in FIG. 2A, the tagging panel 202 may appear to drop down from the upper edge of the desktop environment 200. In another example, the activation area 206 is a range of valid positions within a dedicated area of the desktop environment 200. It should be understood that while the tagging panel 202 and the activation area 206 are shown at the top edge of the desktop environment 200, the tagging panel 202 and the activation area 206 can be positioned in any suitable orientation and/or position within the desktop environment 200.

Similar to the examples described above, the tagging panel 202 includes a plurality of visual indicators 208 that can be selected. The visual indicators 208 included in the tagging panel 202 can be based on past usage (e.g., usage frequency), user preferences (e.g., favorites), and/or other selection criteria. Furthermore, in some examples, activating the tagging mode via the tagging panel 202 triggers an onscreen content scan that identifies various visual content objects such as images and text. Associated identifiers can be rendered in the desktop environment tagging mode, e.g., via shaded boxes as shown in FIG. 2A.

For example, one scanned content indicator 214A identifies a uniform resource locator of the product page 212. In various examples, such a content indicator 214A can be configured to identify any interactable content objects such as embedded links. In another example, a scanned content indicator 214B identifies a title of the product page 212. In still another example, a scanned content indicator 214C identifies a price of the item listed in the product page 212. In still another example, a scanned content indicator 214D identifies an image of the item listed in the product page 212. In this way, the scanned content indicators 214A-214D serve as an anchoring point to which a user can attach one of the visual indicators 208. While specific examples of scanned content indicators 214A-214D are shown and described with respect to FIG. 2A, it should be understood that scanned content indicators 214 can be configured to identify other visual content (e.g., images, text, user interface elements) to which a visual indicator 208 can be attached.

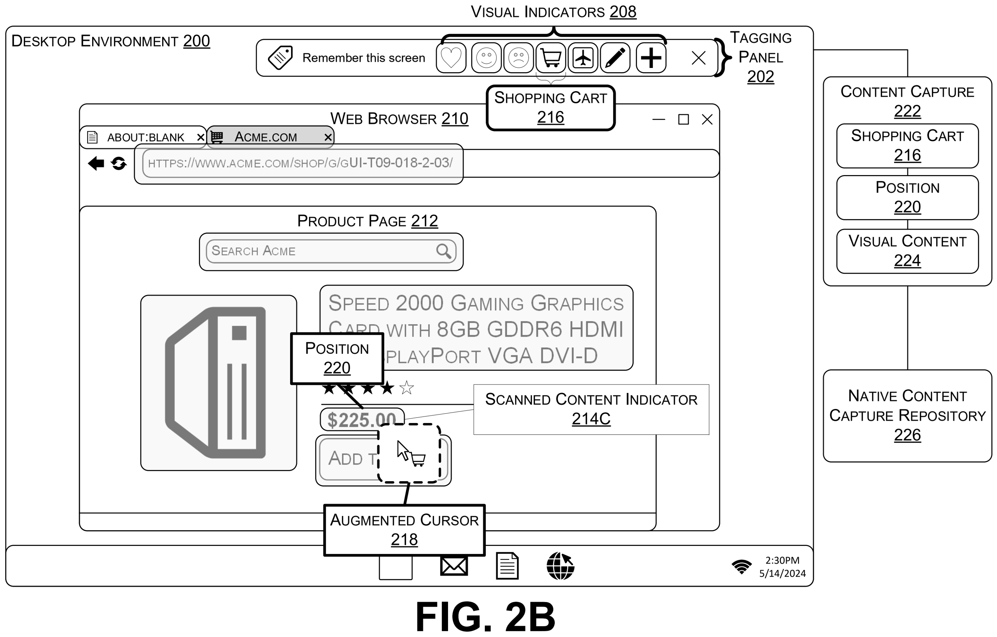

Turning now to FIG. 2B, a user selects the shopping cart visual indicator 216 from the plurality of visual indicators 208 in the tagging panel 202. In response, the desktop environment 200 renders an augmented cursor 218 in which a default cursor (e.g., the cursor 204) is augmented with a rendering of the selected visual indicator (e.g., the shopping cart visual indicator 216). In this way, the augmented cursor 218 communicates, to the user, (1) that the desktop environment 200 is in tagging mode and (2) that the shopping cart visual indicator 216 is the currently selected visual indicator. Accordingly, the user can navigate the augmented cursor 218 to a specific position 220 using a user-directed positioning control (e.g., a pointing device, a directional input device, a voice command) to place the shopping cart visual indicator 216. As shown, the position 220 is at the scanned content indicator 214C identifying the price of the item listed in the product page 212. In various examples, the user can provide an input (e.g., a click, a tap, a voice command) to confirm the position 220 at which to place the shopping cart visual indicator 216.

In response to the confirmation input, the tagging system generates a content capture 222 of the desktop environment 200 in which the content capture 222 includes the shopping cart visual indicator 216 in association with the position 220 selected by the user. Similar to the examples described above, the shopping cart visual indicator 216 is attached to the content capture 222 in that data defining the shopping cart visual indicator 216 is stored in association with data defining the content capture 222. In addition, however, additional data is stored defining the position 220 of the shopping cart visual indicator 222 such that when the content capture 222 is rendered and/or otherwise accessed by an external entity (e.g., a software application) the data defining the shopping cart visual indicator 216 and the data defining the position 220 is displayed and/or retrieved in addition to the data defining the content capture 222.

In addition, the position 220 of the shopping cart visual indicator 216 can further be associated with an object of visual content 224 that is collocated with the position 220 within the content capture 222 of the desktop environment 200. Stated another way, in the event the position 220 of a selected visual indicator (e.g., the shopping cart visual indicator 216) lies within the bounds of a scanned content indicator 214C, the tagging system determines a connection between the selected visual indicator and the visual content 224 therein. In this way, rather than only associate the shopping cart visual indicator 216 with the content capture 222 generally, the tagging system can additionally associate the shopping cart visual indicator 216 with a specific visual content object thereby providing a more customizable user experience. Accordingly, the content capture 222 is stored in a native content capture repository 226 similar to the examples discussed above with respect to FIGS. 1A and 1B.

Consequently, the augmented cursor 218 enables a user to achieve additional granularity when tagging a content capture 222. Instead of and/or in addition to generally associating the selected visual indicator (e.g., the shopping cart visual indicator 216) with the content capture 222, the user can tag specific positions and/or visual content objects 224. In various examples, this association further causes modification of the appearance of the visual content object 224 such as changing a color, a size, and/or other attribute of the content object. In other examples, the association causes modification of the appearance of the content capture 222 itself, such as blurring the content capture 222 to isolate the visual content object 224, cropping the content capture 222, and the like. As such, when the user subsequently reviews the content capture 222, the visual content 224 they were originally interested in is shown prominently. Furthermore, the user may optionally apply a plurality of visual indicators 208 at different positions of the content capture 222 to tag different visual content objects. For instance, the user may apply the shopping cart visual indicator 216 to the name of the item in the product page 212 while applying the heart visual indicator to the price of the item.

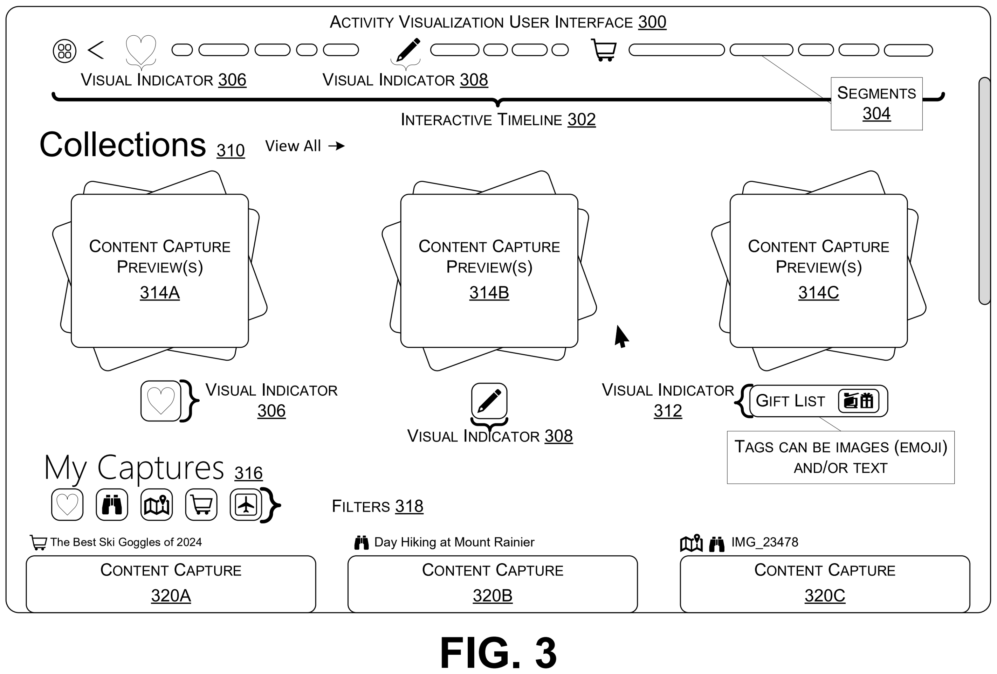

Proceeding now to FIG. 3, aspects of an activity visualization user interface 300 for viewing and interacting with content captures are shown and described. In one aspect, the activity visualization user interface 300 includes an interactive timeline 302 comprising a plurality of segments 304 in which an individual segment represents one or more corresponding content captures. Accordingly, the segments 304 are ordered chronologically from left to right and can include an associated visual indicator that is overlayed on the segments 304. For instance, one grouping in the interactive timeline 302 includes a segment tagged with a "heart" visual indicator 306. In another example, one segment of the interactive timeline 302 is tagged with a "pencil" visual indicator 308.

In addition to the interactive timeline 302, the activity visualization user interface 300 includes a view of collections 310 that represent groupings of content captures according to visual indicators such as the "heart" visual indicator 306 and "pencil" visual indicator 308. As mentioned above, the visual indicator that tags a content capture can include a pictogram (e.g., an emoji) and/or a string of text, among other examples. For example, the visual indicator 312 is titled "Gift List" and optionally includes a pictogram of various gift items. In various examples, such a visual indicator 312 can be custom created using user-defined pictograms and/or user-defined text strings for specific purposes and/or tasks. Furthermore, each collection 310 of content captures includes a content capture preview 314A-314C. In a specific example, the content capture preview 314A-314C renders the most recent content capture in the collection 310 on top of a "stack" including a predefined number of most recently generated content captures. In another example, the "stack" includes the most frequently access content captures.

In still another example of functionality, the activity visualization user interface 300 includes a "My Captures" section 316 that enables a user to browse individual content captures 320A-320C using various visual indicators as filters 318 to selectively surface content captures 320 that are associated with one or more visual indicators. For instance, a user can activate a "shopping cart" filter 318 to surface a content capture 320A that the user previously associated (e.g., tagged) with the "shopping cart" visual indicator. Moreover, a user can select multiple filter 318. For example, the user selects the "binoculars" and "map" filter 318. In response, the activity visualization user interface 300 surfaces content captures 320B and 320C that have one or both of the selected "binoculars" and "map" filter 318. In this way, the user can customize the views of the activity visualization user interface 300 to surface relevant content captures 320A-320C.

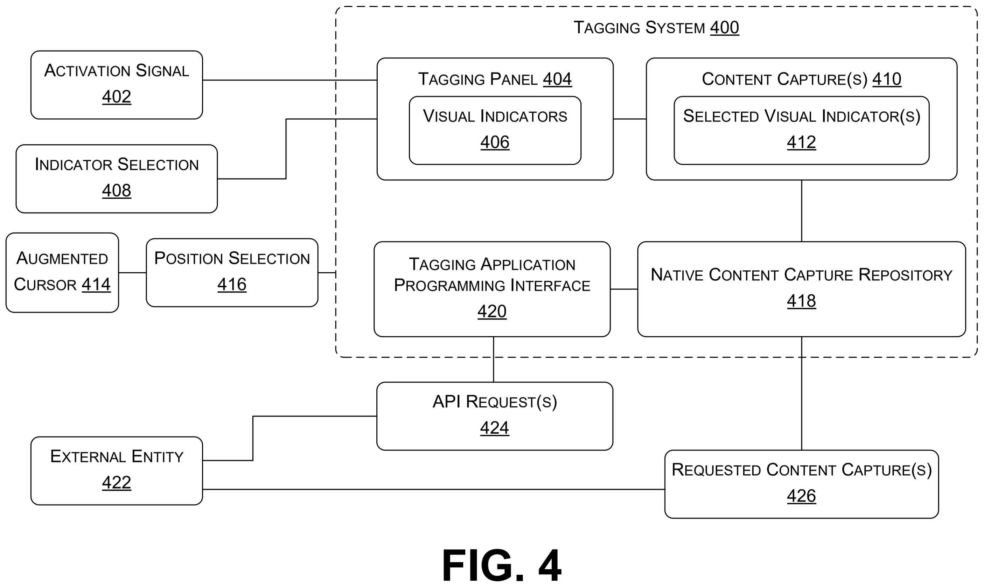

Turning now to FIG. 4, aspects of a tagging system 400 for enabling user-directed organization of content captures are shown and described. Generally described, the tagging system 400 is a native component of an operating system. As discussed above, a user can activate a tagging mode by selecting a system tray icon or performing a gesture within an activation area to activate a tagging panel. In another example, the user activates the tagging panel using a keyboard shortcut, voice command, or other suitable activation command. In general, such actions constitute an activation signal 402 that causes the tagging system 400 to (1) pause desktop environment activity such as multimedia content and (2) activate a tagging panel 404 displaying a plurality of visual indicators 406. It should be understood that the activation signal 402 can be configured in any suitable manner in accordance with user preferences, accessibility technologies, and other factors.

Accordingly, the user can provide an indicator selection 408 at the tagging panel 404 that identifies one or more of the visual indicators 406 for use in the tagging mode. In one example, such as those discussed above with respect to FIGS. 1A and 1B, the tagging system 400 generates a content capture 410 that is associated with a selected visual indicator 412 identified by the indicator selection 408. That is, the selected visual indicator 412 is generally associated with the content capture 410 and is not associated with a particular object of visual content (e.g., image, text).

In an alternative example, such as those discussed above with respect to FIGS. 2A and 2B, the tagging system 400 generates an augmented cursor 414 with which the user can provide a position selection 416 to apply the selected visual indicator 412. In various examples, the tagging system 400 determines an association between the selected visual indicator 412 and an object of visual content. For instance, in the event the selected visual indicator 412 is placed within the bounds of an image, the selected visual indicator 412 is associated with the image by the tagging system 400. In this way, instead of and/or in addition to generally associating the selected visual indicator 412 with the content capture 410 as a whole, the user can tag specific visual content objects. Moreover, the user can optionally apply multiple selected visual indicators 412 to the content capture 410 using the augmented cursor 414.

Accordingly, the content capture(s) 410 and associated selected visual indicator(s) 412 are stored in a native content capture repository 418. As mentioned above, the native content capture repository 418 is an operating system-level storage location that is accessible to applications outside of the tagging system 400. This access is provided via a tagging application programming interface 420. Generally described, the tagging application programming interface 420 is a software component that exposes various functionalities of the tagging system 400 to an external entity 422 (e.g., an application, a website) in accordance with published documentation. Such functionalities include reading and/or writing to the native content capture repository 418, organization of visual content using visual indicators, and the like. In some examples, explicit user approval is required before an external entity 422 is authorized to receive content capture(s) 410 and/or associated visual indicator(s) 412, or indications thereof.

As such, the external entity 422 can interact with the tagging system 400 by submitting application programming interface (API) requests 424 to the tagging application programming interface 420. In one example, the external entity 422 is a personal shopping tool (e.g., a browser extension) that a user can utilize to organize and/or budget for items they wish to purchase online. Accordingly, the external entity 422 submits an API request 424 for retrieving content captures 410 that are associated with selected visual indicators 412 that are commonly associated with online shopping (e.g., a shopping cart, a dollar sign). In response, the tagging system 400 provides the requested content captures 426 to external entity 422. In another example, the external entity 422 is a productivity assistant that enables the user to import content captures from another device (e.g., a smartphone) to the tagging system 400. As such, the external entity 422 submits an API request 424 requesting access to import content captures 426 into the native content capture repository 418. In this way, the tagging system 400 enables broad access and thus utility for a user's content captures 410. However, by controlling access to the native content capture repository 418 via the tagging application programming interface 420, the tagging system 400 can likewise safeguard user data.

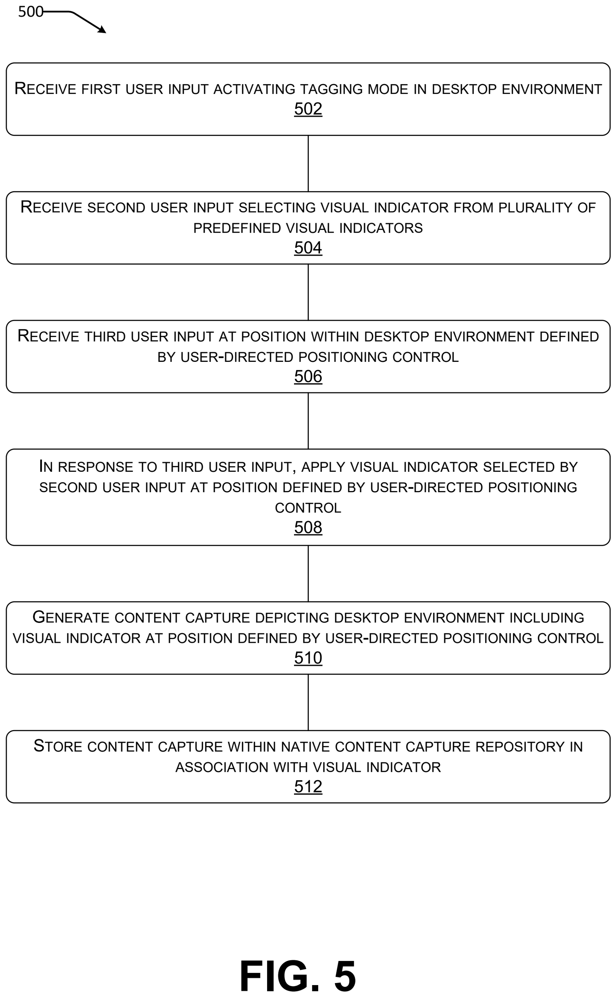

Turning now to FIG. 5, aspects of a process 500 for tagging visual content in a desktop environment of a computing device for collection in an activity visualization user interface are shown and described. With respect to FIG. 5, the process 500 begins at operation 502 in which a tagging system receives a first user input activating a tagging mode within a desktop environment. As discussed above, this first user input can be selecting a system tray icon, performing a gesture within a predefined activation area, selecting a keyboard shortcut, or performing another suitable action.

Next, at operation 504, the tagging system receives a second user input selecting a visual indicator from a plurality of predefined visual indicators. As shown and described above with respect to FIGS. 1A-4, the plurality of predefined visual indicators are displayed within a tagging panel that is activated in response to the user's activation of the tagging mode. Moreover, the visual indicators can include pictograms (e.g., emoji) and/or strings of text.

Then, at operation 506, the tagging system receives a third user input at a position within the desktop environment defined by a user-directed positioning control. In various examples, the user-directed positioning control can be a pointing device, (e.g., a mouse, a stylus) a directional input device, (e.g., a keyboard, a gamepad) and/or a voice command.

In response to the third user input, the process 500 proceeds to operation 508 in which the tagging system applies the visual indicator selected by the second user input at the position defined by the user-directed positioning control. As described above, the position defined by the user-directed positioning control can enable the tagging system to determines an association with a specific object of visual content within the desktop environment such as an image and/or a string of text.

Subsequently, at operation 510, the tagging system generates a content capture depicting the desktop environment including the visual indicator at the position defined by the user-directed positioning control. As described in a specific example above with respect to FIG. 2B, a user can place their selected visual indicator (e.g., a "shopping cart") at the displayed price of a product listing. The resulting content capture accordingly displays the selected visual indicator at the specified positioned.

At operation 512, the tagging system stores the content capture within a native content capture repository in association with the visual indicator selected by the user. Generally described, the native content capture repository is an operating system-level storage location that is accessible to entities (e.g., applications, websites) that are external to the tagging system. In various examples, access to the native content capture repository is provisioned via an API. Accordingly, such external entities can submit API requests to read and/or write to the native content capture repository. In addition, as discussed above with respect to FIG. 3, tagged content captures can be organized into groupings such as collections and segments of an interactive timeline according to the visual indicator associated with each content capture. Accordingly, a user can interact with these groupings via an activity visualization user interface that surfaces the groupings which can be filtered by visual indicator.

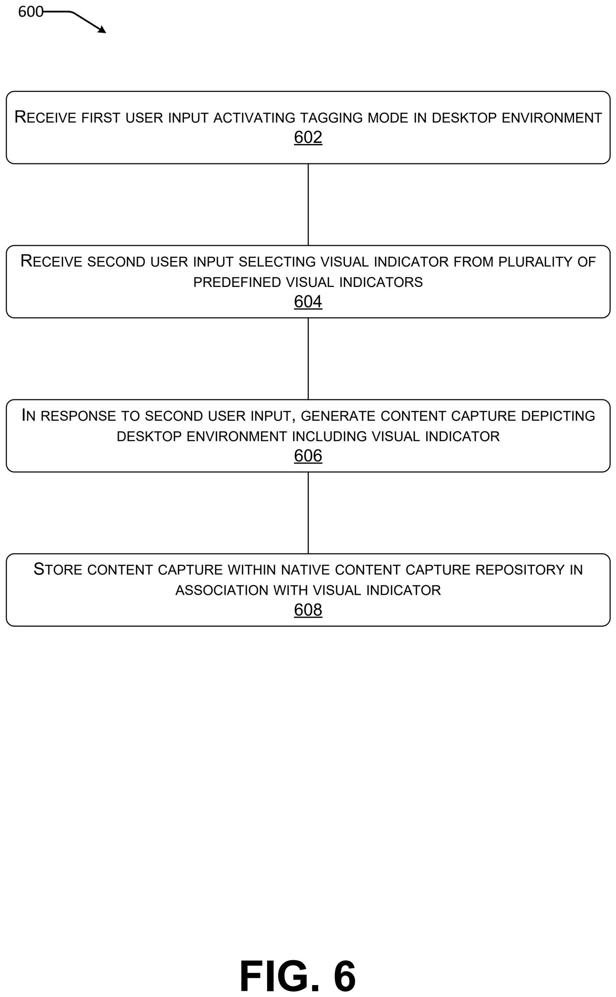

Turning now to FIG. 6, aspects of a process 600 for tagging visual content in a desktop environment of a computing device for collection in an activity visualization user interface are shown and described. With respect to FIG. 6, the process 600 begins at operation 602 in which a tagging system receives a first user input activating a tagging mode within a desktop environment. As discussed above, this first user input can be selecting a system tray icon, performing a gesture within a predefined activation area, selecting a keyboard shortcut, or performing another suitable action.

Next, at operation 604, the tagging system receives a second user input selecting a visual indicator from a plurality of predefined visual indicators. As shown and described above with respect to FIGS. 1A-4, the plurality of predefined visual indicators are displayed within a tagging panel that is activated in response to the user's activation of the tagging mode. Moreover, the visual indicators can include pictograms (e.g., emoji) and/or strings of text.

Then, at operation 606, in response to the second user input selecting the visual indicator, the tagging system generates a content capture depicting the desktop environment that includes the selected visual indicator. In various examples, the second user input is provided via a pointing device, (e.g., a mouse, a stylus) a directional input device, (e.g., a keyboard, a gamepad) and/or a voice command.

At operation 608, the tagging system stores the content capture within a native content capture repository in association with the visual indicator. In various examples, the native content capture repository is an operating system-level storage location that is accessible to entities (e.g., applications, websites) that are external to the tagging system. In various examples, access to the native content capture repository is provisioned via an API. Accordingly, such external entities can submit API requests to read and/or write to the native content capture repository. In this way, the tagging system enhances the flexibility and utility of content captures by enabling diverse user experiences that leverage content capture data.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can begin and/or end at any time and need not be performed in their entirety. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the processes 500 and 600 can be implemented, at least in part, by modules running the features disclosed herein can be a dynamically linked library, a statically linked library, functionality produced by an application programing interface, a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the processes 500 and 600 may also be implemented in other ways. In addition, one or more of the operations of the processes 500 and 600 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

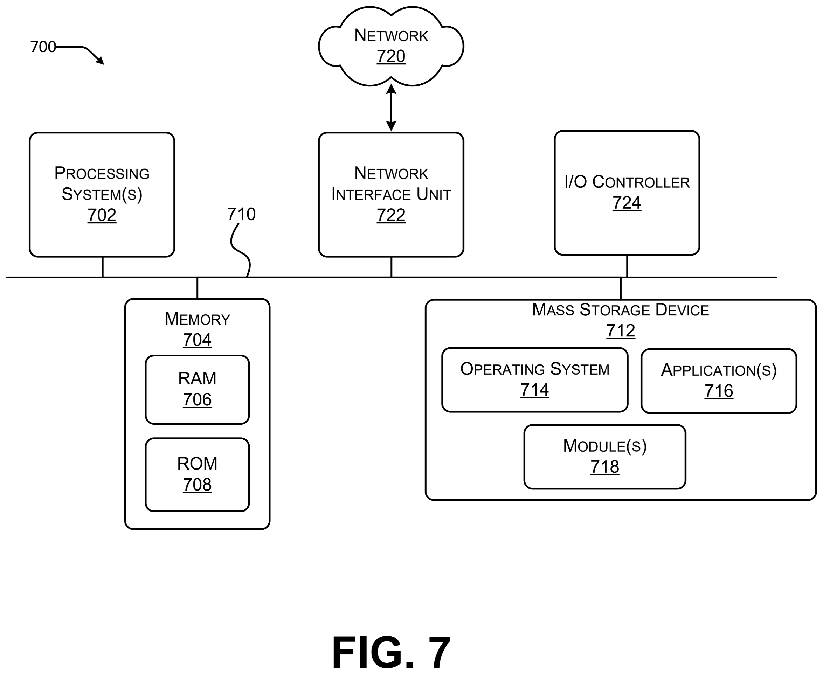

FIG. 7 shows additional details of an example computer architecture 700 for a device, capable of executing computer instructions (e.g., a module or a program component described herein). The computer architecture 700 illustrated in FIG. 7 includes processing system 702, a system memory 704, including a random-access memory 706 (RAM) and a read-only memory (ROM) 708, and a system bus 710 that couples the memory 704 to the processing system 702. The processing system 702 comprises processing unit(s).

Processing unit(s), such as processing unit(s) of processing system 702, can represent, for example, a CPU-type processing unit, a GPU-type processing unit, a field-programmable gate array, another class of digital signal processor (DSP), or other hardware logic components that may, in some instances, be driven by a CPU. For example, illustrative types of hardware logic components that can be used include Application-Specific Integrated Circuits, Application-Specific Standard Products, System-on-a-Chip Systems, Complex Programmable Logic Devices, and the like.

A basic input/output system containing the basic routines that help to transfer information between elements within the computer architecture 700, such as during startup, is stored in the ROM 708. The computer architecture 700 further includes a mass storage device 712 for storing an operating system 714, application(s) 716, modules 718, and other data described herein.

The mass storage device 712 is connected to processing system 702 through a mass storage controller connected to the bus 710. The mass storage device 712 and its associated computer-readable media provide non-volatile storage for the computer architecture 700. Although the description of computer-readable media contained herein refers to a mass storage device, the computer-readable media can be any available computer-readable storage media or communication media that can be accessed by the computer architecture 700.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 700 may operate in a networked environment using logical connections to remote computers through the network 720. The computer architecture 700 may connect to the network 720 through a network interface unit 722 connected to the bus 710. The computer architecture 700 also may include an input/output controller 724 for receiving and processing input from a number of other devices, including a keyboard, mouse, touch, or electronic stylus or pen. Similarly, the input/output controller 724 may provide output to a display screen, a printer, or other type of output device.

The software components described herein may, when loaded into the processing system 702 and executed, transform the processing system 702 and the overall computer architecture 700 from a general-purpose computing system into a special-purpose computing system customized to facilitate the functionality presented herein. The processing system 702 may be constructed from any number of transistors or other discrete circuit elements, which may individually or collectively assume any number of states. More specifically, the processing system 702 may operate as a finite-state machine, in response to executable instructions contained within the software modules disclosed herein. These computer-executable instructions may transform the processing system 702 by specifying how the processing system 702 transition between states, thereby transforming the transistors or other discrete hardware elements constituting the processing system 702.

The techniques presented herein provide an interactive user interface for user-directed organization of content captures using visual indicators (e.g., tags) and a native content capture repository for systemwide interoperability. In various examples, a user can perform a gesture or other input to activate a tagging mode within a desktop environment. The user can then select a visual indicator (e.g., an emoji, text) from the tagging panel to attach to a content capture of the desktop environment. In one example, the visual indicator is generally associated with the content capture as a whole. In another example, the user utilizes an augmented cursor to place the selected visual indicator at a specific location in association with a specific object of visual content (e.g., an image, a block of text). Moreover, as content captures are stored natively, e.g., at the operating system level, external applications can access content captures via an application programming interface. The disclosure presented herein also encompasses the subject matter set forth in the following clauses.

Example Clause A, a method for tagging visual content in a desktop environment of a computing device for collection into a grouping within an activity visualization user interface comprising: activating a tagging panel in response to a first user input activating a visual content tagging mode within the desktop environment, the tagging panel including a plurality of predefined visual indicators; receiving a second user input at the tagging panel selecting a visual indicator from the plurality of predefined visual indicators; receiving a third user input at a position within the desktop environment, wherein the position is defined by a user-directed positioning control; in response to the third user input, applying the visual indicator selected by the second user input at the position defined by the user-directed positioning control; generating a content capture depicting the desktop environment, including the visual indicator at the position defined by the user-directed positioning control; and storing the content capture within a native content capture repository in association with the visual indicator selected by the second user input within the activity visualization user interface.

Example Clause B, the method of Example Clause A, wherein the native content capture repository is accessible to entities that are external to the activity visualization user interface.

Example Clause C, the method of Example Clause A or Example Clause B, wherein the visual indicator is a pictogram.

Example Clause D, the method of Example Clause A or Example Clause B, wherein the visual indicator is a text string.

Example Clause E, the method of any one of Example Clause A through D, further comprising: receiving, at the native content capture repository, an application programming interface request for the content capture including the visual indicator from an entity that is external to the activity visualization user interface; and in response to the application programming interface request, providing the content capture to the entity.

Example Clause F, the method of any one of Example Clause A through E, wherein the first user input is selecting a system tray icon.

Example Clause G, the method of any one of Example Clause A through E, wherein the first user input is a keyboard shortcut.

Example Clause H, the method of any one of Example Clause A through E, wherein the first user input is a hover gesture input.

Example Clause I, the method of any one of Example Clause A through H, further comprising: organizing the content capture into a grouping according to the visual indicator selected by the second user input; receiving a selection of the visual indicator within the activity visualization user interface; and in response to the selection, surfacing at least one additional content capture based on the grouping according to the visual indicator.

Example Clause J, the method of any one of Example Clause A through I, wherein receiving the third user input comprises modifying a rendering of the user-directed positioning control with the visual indicator selected by the second user input.

Example Clause K, the method of any one of Example Clause A through J, wherein the visual indicator is a custom visual indicator comprising at least one of a user-defined pictogram or a user-defined text string.

Example Clause L, a system comprising: a processing system; and a computer-readable medium having encoded thereon, computer-readable instructions that when executed by the processing system, causes the system to perform operations comprising: activating a tagging panel in response to a first user input activating a visual content tagging mode within the desktop environment, the tagging panel including a plurality of predefined visual indicators; receiving a second user input at the tagging panel selecting a visual indicator from the plurality of predefined visual indicators; receiving a third user input at a position within the desktop environment, wherein the position is defined by a user-directed positioning control; in response to the third user input, applying the visual indicator selected by the second user input at the position defined by the user-directed positioning control; generating a content capture depicting the desktop environment, including the visual indicator at the position defined by the user-directed positioning control; and storing the content capture within a native content capture repository in association with the visual indicator selected by the second user input within the activity visualization user interface.

Example Clause M, the system of Example Clause L, wherein the visual indicator is a pictogram.

Example Clause N, the system of Example Clause L, wherein the visual indicator is a text string.

Example Clause O, the system of any one of Example Clause L through N, wherein the operations further comprise: receiving, at the native content capture repository, an application programming interface request for the content capture including the visual indicator from an entity that is external to the activity visualization user interface; and in response to the application programming interface request, providing the content capture to the entity.

Example Clause P, the system of any one of Example Clause L through O, wherein the operations further comprise: organizing the content capture into a grouping according to the visual indicator selected by the second user input; displaying the grouping in an activity visualization user interface; receiving a selection of the visual indicator within the activity visualization user interface; in response to the selection, surfacing at least one additional content capture based on the grouping according to the visual indicator.

Example Clause Q, the system of any one of Example Clause L through P, wherein the operations further comprise modifying a rendering of the user-directed positioning control with the visual indicator selected by the second user input.

Example Clause R, a system comprising: a processing system; and a computer-readable medium having encoded thereon computer-readable instructions that, when executed by the processing system, cause the system to perform operations comprising: activating a tagging panel in response to a first user input activating a visual content tagging mode within the desktop environment, the tagging panel including a plurality of predefined visual indicators; receiving a second user input at the tagging panel selecting a visual indicator from the plurality of predefined visual indicators; in response to the second user input, generating a content capture depicting the desktop environment in association with the visual indicator; and storing the content capture within a native content capture repository in association with the visual indicator selected by the second user input within the activity visualization user interface.

Example Clause S, the system of Example Clause R, wherein the operations further comprise: organizing the content capture into a grouping according to the visual indicator selected by the second user input; displaying the grouping in an activity visualization user interface; receiving a selection of the visual indicator within the activity visualization user interface; in response to the selection, surfacing at least one additional content capture based on the grouping according to the visual indicator.

Example Clause T, the system of Example Clause R or Example Clause S, wherein the visual indicator is a custom visual indicator comprising at least one of a user-defined pictogram and a user-defined text string.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for tagging visual content in a desktop environment (200) of a computing device for collection into a grouping within an activity visualization user interface (300) comprising:
activating a tagging panel (202) in response to a first user input (206) activating a visual content tagging mode within the desktop environment (200), the tagging panel (202) including a plurality of predefined visual indicators (208);
receiving a second user input at the tagging panel selecting a visual indicator (216) from the plurality of predefined visual indicators (208);
receiving a third user input at a position (220) within the desktop environment (200), wherein the position (220) is defined by a user-directed positioning control (218);
in response to the third user input, applying the visual indicator (216) selected by the second user input at the position (220) defined by the user-directed positioning control (218);
generating a content capture (222) depicting the desktop environment, including the visual indicator (216) at the position (220) defined by the user-directed positioning control (218); and
storing the content capture (222) within a native content capture repository (226) in association with the visual indicator (216) selected by the second user input within the activity visualization user interface (300).

2. The method of claim 1, wherein the native content capture repository is accessible to entities that are external to the activity visualization user interface.

3. The method of claim 1 or claim 2, further comprising:
receiving, at the native content capture repository, an application programming interface request for the content capture including the visual indicator from an entity that is external to the activity visualization user interface; and
in response to the application programming interface request, providing the content capture to the entity.

4. The method of any one of claim 1 through 3, wherein the first user input is selecting a system tray icon, a keyboard shortcut, or a hover gesture input.

5. The method of any one of claim 1 through 4, further comprising:
organizing the content capture into a grouping according to the visual indicator selected by the second user input;
receiving a selection of the visual indicator within the activity visualization user interface; and
in response to the selection, surfacing at least one additional content capture based on the grouping according to the visual indicator.

6. The method of any one of claim 1 through 5, wherein receiving the third user input comprises modifying a rendering of the user-directed positioning control with the visual indicator selected by the second user input.

7. The method of any one of claim 1 through 6, wherein the visual indicator is a custom visual indicator comprising at least one of a user-defined pictogram or a user-defined text string.

8. A system comprising:
a processing system; and
a computer-readable medium having encoded thereon, computer-readable instructions that when executed by the processing system, causes the system to perform operations comprising:
activating a tagging panel (202) in response to a first user input (206) activating a visual content tagging mode within the desktop environment (200), the tagging panel (202) including a plurality of predefined visual indicators (208);
receiving a second user input at the tagging panel selecting a visual indicator (216) from the plurality of predefined visual indicators (208);
receiving a third user input at a position (220) within the desktop environment (200), wherein the position (220) is defined by a user-directed positioning control (218);
in response to the third user input, applying the visual indicator (216) selected by the second user input at the position (220) defined by the user-directed positioning control (218);
generating a content capture (222) depicting the desktop environment, including the visual indicator (216) at the position (220) defined by the user-directed positioning control (218); and
storing the content capture (222) within a native content capture repository (226) in association with the visual indicator (216) selected by the second user input within the activity visualization user interface (300).

9. The system of claim 8, wherein the operations further comprise:
receiving, at the native content capture repository, an application programming interface request for the content capture including the visual indicator from an entity that is external to the activity visualization user interface; and
in response to the application programming interface request, providing the content capture to the entity.

10. The system of claim 8 or claim 9, wherein the operations further comprise:
organizing the content capture into a grouping according to the visual indicator selected by the second user input;
displaying the grouping in an activity visualization user interface;
receiving a selection of the visual indicator within the activity visualization user interface;
in response to the selection, surfacing at least one additional content capture based on the grouping according to the visual indicator.

11. The system of any one of claim 8 through 10, wherein the operations further comprise modifying a rendering of the user-directed positioning control with the visual indicator selected by the second user input.

12. The method of any one of claim 1 through 7 or the system of any one of claim 8 through 11, wherein the visual indicator is a pictogram or a text string.

13. A system comprising:
a processing system; and
a computer-readable medium having encoded thereon computer-readable instructions that, when executed by the processing system, cause the system to perform operations comprising:
activating a tagging panel (202) in response to a first user input (206) activating a visual content tagging mode within the desktop environment (200), the tagging panel (202) including a plurality of predefined visual indicators (208);
receiving a second user input at the tagging panel selecting a visual indicator (216) from the plurality of predefined visual indicators (208);
in response to the second user input, generating a content capture (222) depicting the desktop environment in association with the visual indicator (216); and
storing the content capture (222) within a native content capture repository (226) in association with the visual indicator (216) selected by the second user input within the activity visualization user interface (300).

14. The system of claim 13, wherein the operations further comprise:
organizing the content capture into a grouping according to the visual indicator selected by the second user input;
displaying the grouping in an activity visualization user interface;
receiving a selection of the visual indicator within the activity visualization user interface;
in response to the selection, surfacing at least one additional content capture based on the grouping according to the visual indicator.

15. The system of claim 13 or claim 14, wherein the visual indicator is a custom visual indicator comprising at least one of a user-defined pictogram and a user-defined text string.
